# EUROPÄISCHE PATENTANMELDUNG

(11) **EP 2 810 804 A1**
(43) Veröffentlichungstag der Anmeldung: **10.12.2014**
(21) Anmeldenummer: 13002883.0
(22) Anmeldetag: 05.06.2013
(51) Int. Cl.: B60J 10/00, B60J 10/08

(54) **Dichtungsprofil einer Türspaltabdichtung eines Fahrzeuges**

(71) Anmelder: Hübner GmbH & Co. KG, 34123 Kassel (DE)
(72) Erfinder: Krug, Lars, 34376 Immenhausen (DE); Busch, Thomas, 34359 Reinhardshagen (DE)
(74) Vertreter: Walther, Walther & Hinz GbR

(57) **Zusammenfassung**

Gegenstand der Erfindung ist ein Dichtungsprofil (10) einer Türspaltabdichtung einer Türöffnung (3) bei einem Fahrzeug (1) des öffentlichen Personentransports, insbesondere eines Hochgeschwindigkeitszuges, wobei das Dichtungsprofil (10) mindestens einen mit einem Elastomer beschichteten Festigkeitsträger (14) aufweist, wobei der Festigkeitsträger (14) in Längsrichtung des Dichtungsprofils (10) eine geringere Elastizität aufweist als in Querrichtung.

## Beschreibung

Die Erfindung betrifft ein Dichtungsprofil einer Türspaltabdichtung einer Türöffnung bei einem Fahrzeug des öffentlichen Personentransports, insbesondere eines Hochgeschwindigkeitszuges, wobei das Dichtungsprofil mindestens einen mit einem Elastomer beschichteten Festigkeitsträger aufweist.

Ein Dichtungsprofil einer Türspaltabdichtung für ein Hochgeschwindigkeitsschienenfahrzeug ist aus dem Stand der Technik hinreichend bekannt. Derartige Dichtungsprofile sind bei Einsatz bei Türen von Hochgeschwindigkeitszügen stark beansprucht, da die Türen unter einer erheblichen Kraft in die Türöffnung gegen die Dichtungsprofile laufen, und hierbei die Dichtungsprofile einer starken Verformung unterworfen werden. Dies ist erforderlich, um die bei Fahrt mit Hochgeschwindigkeitszügen entstehenden auf die Außenhaut des Zuges einwirkenden Druckstöße, z. B. bei Begegnung zweier Züge oder bei Einfahrt eines Zuges in einen Tunnel, am Eintritt in das Fahrzeuginnere zu hindern.

Bislang ist es so, dass derartige Dichtungsprofile mit komplexem Querschnitt durch Vulkanisation in einer Form hergestellt werden. Dies ist äußerst aufwendig, besonders, wenn man bedenkt, dass eine Vielzahl von Türen unterschiedlicher Größe mit solchen Dichtungen ausgerüstet werden, wobei für ein Dichtungsprofil einer Türart zumindest ein Formwerkzeug bereitgestellt werden muss. Das heißt, der finanzielle Aufwand hinsichtlich der Bereitstellung der entsprechenden Formwerkzeuge, aber auch der Herstellungsaufwand selbst, bedingt durch die Einzelfertigung in der Form, sind enorm.

Die der Erfindung zugrunde liegende Aufgabe besteht darin, hier Abhilfe zu schaffen. Insbesondere besteht die Aufgabe darin, die Dichtungsprofile auch mit komplexem Querschnitt für eine Türspaltabdichtung preisgünstiger herstellen zu können. Um ein solches Dichtungsprofil der eingangs genannten Art preiswerter herstellen zu können ist erfindungsgemäß vorgesehen, dass der Festigkeitsträger in Längsrichtung des Dichtungsprofils eine geringere Elastizität aufweist als in Querrichtung. Hierdurch wird erreicht, dass ein solches Dichtungsprofil mit einem solchen Festigkeitsträger im Wege der Extrusion hergestellt werden kann. Bislang ist man davon ausgegangen, dass Dichtungsprofile mit komplexen Querschnitten mit Festigkeitsträgern im Wege der Extrusion nicht herstellbar sind. Der Grund hierfür ist darin zu finden, dass sich bei der Extrusion im Extrusionswerkzeug der Festigkeitsträger in Falten legt. Dadurch nun, dass der Festigkeitsträger in Längsrichtung des Dichtungsprofils also in Extrusionsrichtung steifer ist als in Querrichtung, wird eine solche Faltenbildung bei der Extrusion vermieden.

Vorteilhafte Merkmale und Ausgestaltungen ergeben sich aus den Unteransprüchen.

Es wurde bereits darauf hingewiesen, dass insbesondere in der Form oder im Konturverlauf komplexe Dichtungsprofile Gegenstand der Erfindung sind. Ein solches komplexes Dichtungsprofil zeichnet sich dadurch aus, dass die Wandung des Dichtungsprofils im Bereich der Dichtlippe einen eingezogenen Bereich aufweist. Die Wandung des Dichtungsprofils weist im eingezogenen oder eingewölbten Zustand des Dichtungsprofils im Bereich der Dichtlippe, im Querschnitt einen U-förmigen Verlauf auf.

Des Weiteren ist insbesondere vorgesehen, dass der Festigkeitsträger eine Vielzahl von sich in Längsrichtung des Dichtungsprofils erstreckender, insbesondere ovaler oder rautenförmiger Öffnungen aufweist. In Bezug auf die Anordnung der ovalen oder rautenförmigen Öffnungen ist nunmehr vorgesehen, dass mehrere Reihen solcher Öffnungen vorgesehen sind, wobei die Öffnungen der einzelnen Reihen versetzt zueinander verlaufen. Insbesondere durch diese in Längsrichtung des Profils sich erstreckenden Öffnungen, und hier insbesondere der sehr schmal ovalen Öffnungen wird eine hohe Stabilität des Festigkeitsträgers in Längsrichtung, das heißt in Extrusionsrichtung erzielt. In Querrichtung hingegen zeigt sich der Festigkeitsträger hoch flexibel, was einen weiteren Vorteil mit sich bringt, der darin besteht, dass ein solches Dichtungsprofil durch Aufblasen im eingebauten Zustand zur Erhöhung der Dichtkraft zwischen Tür einerseits und Rahmen des Fahrzeugs andererseits bzw. auch zwischen zwei Türen eine große Volumenänderung erfahren kann, was die Dichtwirkung vergrößert. Dies hat zur Folge, dass das Dichtungsprofil nicht mehr in dem Maße zusammengequetscht werden muss, wie dies noch nach dem Stand der Technik der Fall ist, mit der weiteren Folge, dass das Dichtungsprofil einem geringerem Verschleiß unterworfen ist.

Insofern sind nach einem weiteren Merkmal der Erfindung an dem Dichtungsprofil Mittel zum Aufblasen des Dichtungsprofils vorgesehen, wobei das Mittel zum Aufblasen des Dichtungsprofils insbesondere als Ventil ausgebildet ist.

Nach einem weiteren Merkmal der Erfindung weist das Dichtungsprofil mindestens ein Verbindungsglied zur Aufnahme durch die Karosserie oder die Tür des Fahrzeugs auf. Es wurde bereits darauf hingewiesen, dass das Dichtungsprofil sowohl an der Stirnseite der Tür als auch an der Stirnseite des Rahmens der Karosserie des Fahrzeugs angeordnet sein kann. Das Verbindungsglied ist nach einem weiteren Merkmal der Erfindung nach Art einer Schiene ausgebildet und ist vorzugsweise aus einem Elastomer ausgebildet, sodass das Dichtungsprofil einschließlich des Verbindungsgliedes in einem Stück extrudiert werden kann. Das Verbindungsglied selbst weist zu beiden Seiten sich in Längsrichtung des Dichtungsprofils erstreckende Nuten auf, um dieses Dichtungsprofil einclipsbar in die Stirnseite der Tür und/oder der Stirnseite des karosserieseitigen Rahmens einsetzen zu können.

Nach einem weiteren Merkmal zeigt das Dichtungsprofil eine Dichtlippe, die vorzugsweise stirnseitig nach außen vorsteht, also je nach Einbau auf die Stirnseite der Tür oder die Stirnseite des karosserieseitigen Rahmens zugerichtet ist.

Die Dichtlippe, die vorzugsweise ebenfalls aus einem Elastomer ausgebildet ist, ist hierbei in Richtung parallel zur Türoberfläche in etwa mittig an dem Dichtungsprofil angeordnet. Sowohl die Anordnung der Dichtlippe als auch die Anordnung des Verbindungsgliedes an dem Dichtungsprofil ist hierbei derart, dass der Festigkeitsträger zumindest bis in die Dichtlippe bzw. das Verbindungsglied hineinragt, um eine stabile Verbindung zwischen dem mit einem Elastomer beschichteten Festigkeitsträger und der Dichtlippe bzw. dem Verbindungsglied bewerkstelligen zu können. Hieraus wird deutlich, dass das Dichtungsprofil aus vier Elementen besteht, nämlich zwei Seitenteilen oder zwei Seitenwangen, umfassend den mit einem Elastomer beschichteten Festigkeitsträger sowie das Verbindungsglied auf der einen Stirnseite des Dichtungsprofils, und gegenüberliegend die Dichtlippe, die gleichfalls mit den Seitenwangen des Dichtungsprofils in Verbindung steht.

Als besonders vorteilhaft bei der Herstellung eines Dichtungsprofils der zuvor beschriebenen Art im Wege der Extrusion hat sich herausgestellt, wenn als Elastomer ein Silikonkautschuk Verwendung findet. Der Grund hierfür ist darin zu finden, dass Silikon für die Extrusion hervorragende Gleiteigenschaften aufweist, was bedingt, dass der Reibwiderstand beim Durchtritt durch das Extrusionswerkzeug gering gehalten werden kann, mit der weiteren Folge, dass auch hierdurch die Faltenbildung des Festigkeitsträgers im Wesentlichen vermieden wird.

Anhand der Zeichnungen wird die Erfindung nachstehend beispielhaft näher erläutert.
- Fig. 1: zeigt schematisch ein Fahrzeug des öffentlichen Personentransportverkehrs mit einer Tür;
- Fig. 2: zeigt einen Schnitt gemäß der Linie II-II aus Fig. 1;
- Fig. 3: zeigt einen Schnitt gemäß der Linie III-III aus Fig. 2;
- Fig. 4: zeigt den Ausschnitt einer Seitenansicht auf das Dichtungsprofil gemäß Fig. 2, wobei jedoch die das Dichtungsprofil aufnehmende Tür weggelassen ist.

Das insgesamt mit 1 bezeichnete Fahrzeug weist in der Karosserie 2 die Türöffnung 3 mit der Tür 5 auf. Die Tür 5 kann hierbei beispielsweise als Ausstellschiebetür oder auch als Schwenktür ausgebildet sein.

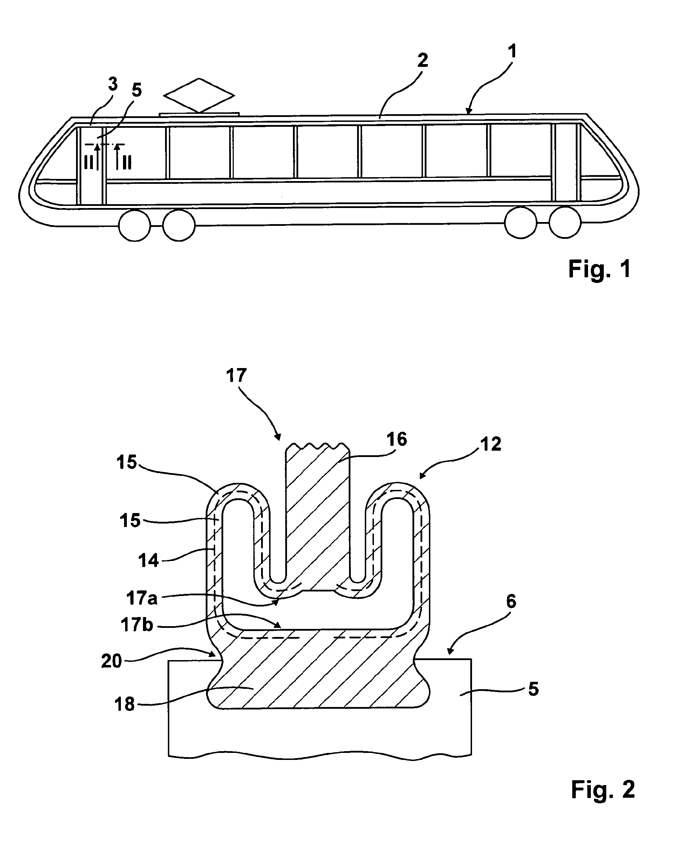

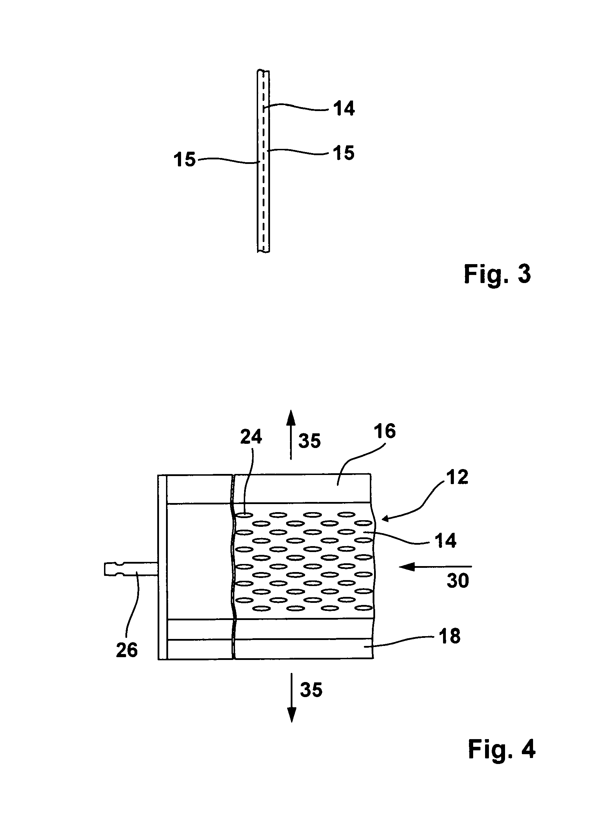

Die Ausbildung des Dichtungsprofils im Einzelnen ergibt sich in Anschauung der Figuren 2 bis 4. So zeigt die Fig. 2 das Dichtungsprofil 10 in einer Schnittdarstellung, wobei das Dichtungsprofil durch die Tür 5 aufgenommen ist. Erkennbar weist das Dichtungsprofil 10 im Bereich der beiden Wandungen 12 einen Festigkeitsträger 14 auf, der mit einer Elastomerschicht 15 z. B. einem Silikonkautschuk beschichtet ist. Die Beschichtung aus einem Elastomer kann hierbei zu beiden Seiten des Festigkeitsträgers 14 vorgenommen sein oder auch nur zu einer Seite. Die Wandung 12 mündet zu jeder Seite in der Dichtlippe 16 und in dem Verbindungsglied 18, wobei das Verbindungsglied 18 im Übergang zu der Wandung 12 zu beiden Seiten sich in Längsrichtung erstreckende Nuten 20 aufweist, was eine einclipsbare Aufnahme in der Stirnseite 6 der Tür 5 oder der Karosserie 2 ermöglicht. Wesentlich bei der Ausgestaltung des Dichtungsprofiles 10 ist, dass der jeweilige Festigkeitsträger 14 im Bereich der Wandung 12 einerseits bis in das Verbindungsglied 18 hineinragt, und andererseits bis in die Dichtlippe 16, um eine stabile Anbindung des Festigkeitsträgers und damit der Flanken an dem Verbindungsglied 18 einerseits und der Dichtlippe 16 andererseits zu bewerkstelligen. Der Festigkeitsträger selbst, der beispielsweise als ein Gewebe oder auch Gewirk oder Gestrick ausgebildet ist, ist vorteilhaft zu beiden Seiten mit der Elastomerschicht 15 versehen. Aus Fig. 4 ist die Ausbildung des Festigkeitsträgers 14 im Einzelnen erkennbar. Der Festigkeitsträger 14 zeigt hierbei mehrere übereinander angeordnete Reihen von sich in Längsrichtung des Dichtungsprofils erstreckender schlank-ovaler Öffnungen 24 auf, die bewirken, dass in Längsrichtung (Pfeil 30) der Festigkeitsträger 14 im Wesentlichen unelastisch ist, in Querrichtung (Pfeil 35) allerdings äußerst elastisch. Dies liegt darin begründet, dass die Öffnungen 24 von der schlank-ovalen Form, die in Fig. 4 dargestellt ist, bei Zug in Richtung des Pfeils 35 in dieser Richtung in der Lage sind auszubauchen, um die gewünschte Elastizität in dieser Richtung bereitstellen zu können, wenn die Dichtung aufgeblasen wird. Gleiches gilt entsprechend bei rautenförmigen Öffnungen.

Die Ausbildung des Festigkeitsträgers kann auch derart sein, dass eine Folie aus einem Kunststoff z. B. einen Polyethylen oder Polypropylen durch z. B. Stanzen oder Prägen mit den oben beschriebenen schlank-ovalen Öffnungen versehen ist.

Das Dichtungsprofil in einer komplexen Querschnittgestaltung gemäß Fig. 2 weist im Bereich der Dichtlippe 16 einen eingezogenen Bereich 17 auf. Das heißt, der Bereich 17a der Wandung 12, der die Dichtlippe 16 aufnimmt, ist unter Verkleinerung des Hohlraums des Dichtungsprofils auf den gegenüberliegenden Bereich 17b der Wandung 12 mit dem Verbindungsglied 18 zu eingewölbt. Das heißt, das Profil weist im Querschnitt einen U-förmigen Verlauf auf. Es wurde bereits darauf hingewiesen, dass insbesondere in der Form bzw. im Konturverlauf komplexe Dichtungsprofile Gegenstand der Erfindung sind. Ein solches komplexes Dichtungsprofil zeichnet sich zusammengefasst dadurch aus, dass die Wandung des Dichtungsprofils im Bereich der Dichtlippe einen eingezogenen Bereich aufweist. Das Dichtungsprofil insgesamt weist insofern mit dem eingezogenen oder eingewölbten Zustand im Querschnitt einen U-förmigen Verlauf auf (Fig. 2).

Aus Fig. 4 ist insofern schematisch ein Ventil 26 erkennbar, durch das das Dichtungsprofil aufgeblasen werden kann. Wird das Dichtungsprofil aufgeblasen, nimmt das Dichtungsprofil eine im Querschnitt rechteckförmige Gestalt ein, bei der die Dichtlippe nach außen vorsteht. Das heißt durch Innendruck wird sich das Dichtungsprofil 10 in Richtung der Ausrichtung der Dichtlippe 16, somit in Richtung des Pfeiles 40 verformen. Hierbei nehmen insbesondere die einzelnen, zunächst länglich ovalen Öffnungen 24 in dem Festigkeitsträger 14 der Flanken 12 dann eine mehr runde Form an. Im Gegenzug kann durch Aufbau eines Unterdrucks das Profil zusammengezogen werden, also in die Form gemäß Fig. 2 überführt werden. Da die Dichtlippe hierbei nicht über das Dichtungsprofil übersteht, besteht nicht die Gefahr der Beschädigung der Dichtlippe, wenn die Tür in die Geschlossenstellung überführt wird.

### Bezugszeichenliste:

- 1: Fahrzeug
- 2: Karosserie
- 3: Türöffnung
- 5: Tür
- 6: Stirnseite der Tür oder der Karosserie
- 10: Dichtungsprofil
- 12: Wandung des Dichtungsprofiles
- 14: Festigkeitsträger
- 15: Elastomerschicht
- 16: Dichtlippe
- 17: eingezogener Bereich
- 17a: Bereich der Wandung mit der Dichtlippe
- 17b: Bereich der Wandung mit dem Verbindungsglied
- 18: Verbindungsglied
- 20: Nuten am Verbindungsglied
- 24: ovale Öffnungen
- 26: Ventil im Dichtungsprofil
- 30: Pfeil
- 35: Pfeil
- 40: Pfeil

## Patentansprüche

1. Dichtungsprofil (10) einer Türspaltabdichtung einer Türöffnung (3) bei einem Fahrzeug (1) des öffentlichen Personentransports, insbesondere eines Hochgeschwindigkeitszuges, wobei das Dichtungsprofil (10) mindestens einen mit einem Elastomer beschichteten Festigkeitsträger (14) aufweist,
**dadurch gekennzeichnet,**
**dass** der Festigkeitsträger (14) in Längsrichtung des Dichtungsprofils (10) eine geringere Elastizität aufweist als in Querrichtung.

2. Dichtungsprofil (10) einer Türspaltabdichtung nach Anspruch 1,
**dadurch gekennzeichnet,**
**dass** der Festigkeitsträger (14) als Gewebe, Gewirk, Gestrick oder Folie ausgebildet ist.

3. Dichtungsprofil (10) einer Türspaltabdichtung nach Anspruch 1 oder 2,
**dadurch gekennzeichnet,**
**dass** der Festigkeitsträger (14) eine Vielzahl von sich in Längsrichtung des Dichtungsprofils (10) erstreckende Öffnungen (24) aufweist.

4. Dichtungsprofil (10) einer Türspaltabdichtung nach Anspruch 3,
**dadurch gekennzeichnet,**
**dass** die Reihen an Öffnungen (24) versetzt zueinander verlaufen.

5. Dichtungsprofil (10) einer Türspaltabdichtung nach einem der voranstehenden Ansprüche,
**dadurch gekennzeichnet,**
**dass** das Dichtungsprofil (10) Mittel zum Aufblasen des Dichtungsprofils (10) aufweist.

6. Dichtungsprofil (10) einer Türspaltabdichtung nach einem der voranstehenden Ansprüche,
**dadurch gekennzeichnet,**
**dass** das Dichtungsprofil (10) mindestens ein Verbindungsglied (18) zu der Aufnahme durch die Karosserie (2) und/oder die Tür (5) des Fahrzeugs (1) aufweist.

7. Dichtungsprofil (10) einer Türspaltabdichtung nach Anspruch 6,
**dadurch gekennzeichnet,**
**dass** das Verbindungsglied (18) nach Art einer Schiene ausgebildet ist.

8. Dichtungsprofil (10) einer Türspaltabdichtung nach Anspruch 7 oder 8,
**dadurch gekennzeichnet,**
**dass** das Verbindungsglied (18) aus einem Elastomer ausgebildet ist.

9. Dichtungsprofil (10) einer Türspaltabdichtung nach einem der Ansprüche 6 bis 8,
**dadurch gekennzeichnet,**
**dass** das Verbindungsglied (18) zu beiden Seiten sich in Längsrichtung des Dichtungsprofils (10) erstreckenden Nuten (20) aufweist.

10. Dichtungsprofil (10) einer Türspaltabdichtung nach einem der voranstehenden Ansprüche,
**dadurch gekennzeichnet,**
**dass** das Dichtungsprofil (10) eine Dichtlippe (16) aufweist.

11. Dichtungsprofil (10) einer Türspaltabdichtung nach Anspruch 10,
**dadurch gekennzeichnet,**
**dass** die Dichtlippe (16) in Richtung parallel zur der Türoberfläche ausgerichtet etwa mittig an dem Dichtungsprofil (10) angeordnet ist.

12. Dichtungsprofil (10) einer Türspaltabdichtung nach Anspruch 10 oder 11,
**dadurch gekennzeichnet,**
**dass** die Wandung des Dichtungsprofils (10) im Bereich der Dichtlippe (16) eingezogen ist.

13. Dichtungsprofil (10) einer Türspaltabdichtung nach Anspruch 12,
**dadurch gekennzeichnet,**
**dass** das Dichtungsprofil (10) im eingezogenem Zustand der Wandung im Bereich der Dichtlippe (16) im Querschnitt einen etwa U-förmigen Verlauf aufweist.

14. Dichtungsprofil (10) einer Türspaltabdichtung nach einem der Ansprüche 7 bis 13,
**dadurch gekennzeichnet,**
**dass** das Dichtungsprofil (10) zu beiden Seiten der Mittelachse die Dichtlippe (16) und das Verbindungsglied (18) verbindend, einen Festigkeitsträger (14) aufweist.

15. Dichtungsprofil (10) einer Türspaltabdichtung nach einem der voranstehenden Ansprüche,
**dadurch gekennzeichnet,**
**dass** das Dichtungsprofil (10) extrudiert ist.

16. Dichtungsprofil (10) einer Türspaltabdichtung nach einem der voranstehenden Ansprüche,
**dadurch gekennzeichnet,**
**dass** das Elastomer ein vernetzbarer Silikonkautschuk ist.

17. Dichtungsprofil (10) einer Türspaltabdichtung nach einem der Ansprüche 3 bis 16,
**dadurch gekennzeichnet,**
**dass** die Öffnungen (24) oval oder rautenförmig in Längsrichtung des Profils (10) erstreckend ausgebildet sind.
